Europäisches Patentamt

European Patent Office

Office européen des brevets

(11) Publication number: 0 508 536 A1

# EUROPEAN PATENT APPLICATION

(21) Application number: 92200957.6

(22) Date of filing: 03.04.92

(51) Int. Cl.⁵: **C08F 220/32**, C08F 220/28, C08F 220/26, C08F 8/00

(30) Priority: 08.04.91 EP 91200813

(43) Date of publication of application:
14.10.92 Bulletin 92/42

(84) Designated Contracting States:
AT BE CH DE DK ES FR GB IT LI NL SE

(71) Applicant: **AKZO N.V.**
**Velperweg 76**
**NL-6824 BM Arnhem(NL)**

(72) Inventor: **Jonker, Eduard Herman**
**Eenlandsweg 9**
**NL-4661 LH Halsteren(NL)**
Inventor: **Weber, Maarten Johannes Jacobus**
**De Anjer 42**
**NL-4631 AA Hoogerheide(NL)**

(74) Representative: **Schalkwijk, Pieter Cornelis**
**Akzo N.V. Patent Department P.O. Box 9300**
**NL-6800 SB Arnhem(NL)**

(54) Aqueous dispersions of self-crosslinking acrylic polymers and water-based thermosetting compositions therefrom.

(57) An aqueous dispersion of a self-crosslinking acrylic polymer is provided which is the aqueous emulsion polymerization product of a particular monomer mixture including both glycidyl and hydroxyl group-containing addition polymerizable monomers. Water-based thermosetting compositions are also provided which are based upon these aqueous dispersions and a strong basic catalyst. These thermosetting composition are particularly suitable for use in formulating aqueous coatings for general industrial use.

EP 0 508 536 A1

Background of the Invention

The present invention relates generally to aqueous dispersions of self-crosslinking acrylic polymers, which can be formulated into water-based thermosetting compositions suitable for use, for example, as general industrial coatings.

Aqueous dispersions of self-crosslinking acrylic polymers are, in a general sense, known in the art. For example, GB-A-2045768 describes such a dispersion which is based upon the emulsion polymerization product of a monomer mixture primarily comprising lower alkyl (meth)acrylate monomers (100 parts), and also including minor amounts of (meth)acrylic acid (1-20 parts) and glycidyl (meth)acrylate (1-15 parts). The aqueous dispersion is said to be useful in the formulation of coatings for magnetic recording medium.

Examples of other such aqueous dispersions are mentioned, for example, in US4933213, EP-A-0267554, JP-LO-70/28999, JP-LO-77/146453 and JP-LO-85/156769.

As relates to the field of general industrial coatings, the trend as in other fields is away from organic solvent-based systems due to environmental and safety concerns. One available alternative is a powder coating; however, these systems require special application equipment which makes the changeover from solvent-based system more expensive and difficult.

It would, therefore, be highly desirable to have a water-based alternative which can be applied in much the same way and utilizing essentially the same equipment as the organic solvent-based counterparts. Not many water-based alternatives, however, are commercially available, and those that are often do not produce films possessing properties similar to those obtainable from organic solvent-based systems.

Summary of the Invention

An aqueous system has now been discovered which is particularly suitable for use in formulating water-based thermosetting coating compositions for general industrial use.

In accordance with the present invention, there is provided an aqueous dispersion of a self-crosslinking acrylic polymer comprising the aqueous emulsion polymerization product of a monomer mixture including a glycidyl group-containing addition polymerizable monomer, characterized in that the monomer mixture comprises

(1) 10-40 wt%   of a glycidyl group-containing addition polymerizable monomer,
(2) 10-40 wt%   of an hydroxyalkyl (meth)acrylate containing 2-12 carbon atoms in the alkyl group, and
(3) 20-80 wt%   of one or more other addition polymerizable monomers, which monomers contain substantially no functionality reactive with epoxy or hydroxyl groups under thermosetting conditions,

wherein the combination of (1), (2) and (3) comprises 100 wt%, and wherein the (1)/(2) weight ratio is such so as to result in an epoxy/OH equivalents ratio of 0,5-2,0.

Water-based thermosetting compositions in accordance with the present invention comprise the above-described aqueous dispersion, to which has optionally been added an alkaline compound, and 0,1-5,0 wt% (based upon the polymer solids of the aqueous dispersion) of a strong basic catalyst, wherein the strong basic catalyst has been added in an amount to result in the thermosetting composition possessing a pH of at least 11.

The aqueous dispersions, in and of themselves, are advantageous in their ease of formulation and dispersion stability.

Further, when combined with the aforementioned strong basic catalysts, the resulting thermosetting compositions can remain storage stable for several weeks (long pot life) yet, under normal thermosetting conditions (e.g., 60°-250°C), cure rapidly enough to avoid fouling problems from dust and other like sources.

When so cured, the resulting films display a good combination of hardness, flexibility, solvent resistance and adhesion to metal substrates, making them especially useful as pigmented and unpigmented general industrial coatings (primers and topcoats) for application onto metal and thermostable plastic substrates such as automotive parts and drums.

These and other features and advantages of the present invention will be more readily understood by those skilled in the art from a reading of the following detailed description and with reference to the specific examples contained therein.

Detailed Description of the Preferred Embodiments

As just mentioned, the aqueous dispersions in accordance with the present invention comprise the aqueous emulsion polymerization product of the following monomer mixture:

(1) 10-40 wt%     of glycidyl group-containing addition polymerizable monomer,

(2) 10-40 wt%     of an hydroxyalkyl (meth)acrylate containing 2-12 carbon atoms in the alkyl group, and

(3) 20-80 wt%     of one or more other addition polymerizable monomers, which monomers contain substantially no functionality reactive with epoxy or hydroxyl groups under thermosetting conditions,

wherein the combination of (1), (2) and (3) comprises 100 wt%, and wherein the (1)/(2) weight ratio is such so as to result in an epoxy/OH equivalents ratio of 0,5-2,0, preferably 0,75-1,25, and especially about 1.

By "thermosetting conditions" above is it meant normal thermosetting conditions for these types of compositions, that is, at temperatures from 60°C to 250°C, and preferably between 100-200°C.

By "substantially" is it meant only minor amounts, generally less than 5 wt% based upon the combined weight of (1), (2) and (3). This is especially so for acid group-containing addition polymerizable monomers as mentioned below.

As suitable glycidyl group-containing addition polymerizable monomers may be mentioned glycidyl acrylate, glycidyl methacrylate, allyl glycidyl ether and mixtures thereof. Of these, the (meth)acrylates are preferred.

As suitable hydroxyalkyl (meth)acrylates may be mentioned those containing from 2 to 12 carbon atoms in the alkyl group, as well as mixtures thereof. As specific examples may be mentioned hydroxyethyl (meth)acrylate, hydroxypropyl (meth)acrylates, hydroxybutyl (meth)acrylates, hydroxyhexyl (meth)acrylates, hydroxycyclohexyl (meth)acrylates and N-methylol(meth)acrylamides. Most preferred are those hydroxyalkyl (meth)acrylates containing 2-4 carbon atoms in the alkyl group, and especially hydroxyethyl methacrylate, hydroxypropyl acrylates, hydroxypropyl methacrylates and hydroxybutyl acrylates.

As is indicated from the above, the addition polymer must contain both epoxy and hydroxyl groups attached to the backbone. This is necessary in order to obtain a desirable level of self-crosslinking.

Within the aforementioned wt% and ratio ranges of components (1) and (2), films produced from these aqueous dispersions (as described further below) have been found to possess the best combination of desirable properties such as hardness, flexibility, water and solvent resistance, weathering resistance and adhesion. For example, within the epoxy/OH equivalents ratios mentioned above, use of greater than 40 wt% of either component may result in brittle films, while use of less than 10 wt% may result in too little water and solvent resistance. Within the weight percentages mentioned above, use of a too low or too high epoxy/OH equivalents ratio may result in unacceptable water and solvent resistance.

As suitable other addition polymerizable monomers may be mentioned, for example, one or more of the following: (cyclo)alkyl(meth)acrylates with 1-12 carbon atoms in the (cyclo)alkyl group, such as methyl-(meth)acrylate, ethyl(meth)acrylate, propyl(meth)acrylate, isopropyl(meth)acrylate, butyl(meth)acrylate, 2-ethylhexyl(meth)acrylate, octyl(meth)acrylate, isobornyl(meth)acrylate, dodecyl(meth)acrylate and cyclohexyl(meth)acrylate; the (cyclo)alkylesters of ethylenically unsaturated dicarboxylic acids with 1-12 carbon atoms in the (cyclo)alkyl groups, such as dimethylmaleate, diethylmaleate, diethylfumarate, dipropylmaleate, dibutylmaleate, dibutylfumarate, 2-ethylhexylmaleate, 2-ethylhexylfumarate, octylmaleate, isobornylmaleate, dodecylmaleate and cyclohexylmaleate; (meth)acrylates with ether groups, such as 2-methoxy-ethylmethacrylate, 2-ethoxy-ethylmethacrylate and 3-methoxy-propylmethacrylate; monovinyl aromatic compounds, such as styrene, vinyltoluene, α-methylstyrene, para-methylstyrene and vinylnapthelene; other substituted (meth)acrylic compounds, such as (meth)acrylamide, (meth)acrylonitrile and N-alkyl(meth)-acrylamides; and other monounsaturated compounds such as vinylchloride, vinylacetate, vinylpropionate and vinylpyrrolidone.

These other addition polymerizable monomers may be utilized to tailor various properties of the dispersions and films therefrom. These and other factors will be appreciated by those skilled in the art, who can adjust the choice of other addition polymerizable monomers accordingly.

Acid group-containing monomers, however, are not in general suitable for use with the present systems, as the acid groups tend to deactivate the strong basic catalysts (discussed further below) utilized in formulating the thermosetting compositions.

An especially preferred monomer mixture for use in formulate thermosetting compositions comprises the following:

(1) 10-40 wt%     of the glycidyl group-containing addition polymerizable monomer;

(2) 10-40 wt%     of the hydroxyalkyl (meth)acrylate containing 2-12 carbon atoms, and especially 2-4 carbon atoms, in the alkyl group;

(3a) 10-40 wt%     of an alkyl (meth)acrylate containing 2-12 carbon atoms, and especially 2-4 carbon atoms, in the alkyl group; and

(3b) 10-40 wt%     of a monovinyl aromatic compound, especially those selected from styrene, para-methylstyrene and vinyl toluene.

Aqueous emulsions of these monomer mixtures may be produced in accordance with normal aqueous emulsion polymerization techniques, the details of which are well-known to those skilled in the art. See, for example, H. Warson, The Applications of Synthetic Resin Emulsions (1972).

In a preferred method, the monomer mixture, an emulsifier and an initiator are dispersed (emulsified) in water via normal techniques, then reacted at temperatures generally ranging from 50-80°C (preferably 55-70°C) to substantial completion. The resulting product is an aqueous dispersion (emulsion) of the polymer, generally comprising a solids content in the range of 30-60 wt%.

The preferred emulsifier is non-ionic in nature or a non-ionic/anionic combination, and is utilized in amounts generally ranging from 0,1-5,0 wt% based upon the weight of the monomers. Suitable emulsifiers are well-known to those skilled in the art.

The initiators may be chosen from among any one of number well-known alternatives, preferably water-soluble alternatives, such as peroxide and azo initiators, and are generally utilized in amounts ranging from 0,1-5,0 wt% based upon the weight of the monomer mixture. An especially preferred initiator system is a redox system, combining an OH peroxide as initiator with a reductor, so that polymerization temperatures can be held relatively low.

In accordance with the present invention, thermosetting compositions can be formulated based upon the above-described aqueous dispersions.

In formulating these thermosetting compositions, an alkaline compound may optionally be added to the aqueous dispersions in order to raise the pH thereof. One effect of this is to lower the amount of strong basic catalyst needed to arrive at the required pH of greater than 11. As examples of suitable alkaline compounds may be mentioned ammonia or an amine alcohol (e.g., amino propanol) which, when added, are preferably added in an amount sufficient to raise the pH to at least 7, more preferably between 7-10, still more preferably between 8-9,5, and especially between 8,5-9,0.

To this optionally neutralized dispersion is added from 0,1-5,0 wt% (based upon the polymer solids of the aqueous dispersion) of a strong basic catalyst, wherein the strong basic catalyst has been added in an amount to result in the thermosetting composition possessing a pH of at least 11, more preferably in the range of 11-13, and especially in the range of 11,5-12,5.

Strong basic catalysts for the reaction of epoxy/OH groups are generally well-known to those skilled in the art. As especially preferred strong basic catalysts are those selected from:

(a) tetraalkylammonium hydroxides containing 1-5 carbon atoms in the alkyl group, and

(b) 1,4-diazabicyclo [2.2.2] octane.

This group of strong basic catalysts has been found to work especially well in combination with the aqueous dispersions in accordance with the present invention under normal thermosetting conditions.

Preferred among the above described strong basic catalysts are the tetraalkylammonium hydroxides and especially tetrabutylammonium hydroxide, as the use of these compounds tends to result in films of lesser color.

These thermosetting compositions are particularly suitable for use a coating compositions in the general industrial field, such as pigmented and unpigmented primers and topcoats for application onto metal and thermostable plastic substrates such as automotive parts and drums.

Depending upon the field of application, the thermosetting compositions in accordance with the present invention may contain a variety of additives common to the paint industry such as pigments, coloring agents, pigment dispersing agents and other rheological additives. For example, other aqueous resins can be added to improve the flow properties of the coating. These compositions may also contain minor amounts (less than 10wt% based upon the total weight) of a co-solvent which, if utilized, preferably is water-miscible. Examples of such include butyl glycol, isopropyl glycol, butyl diglycol, isopropanol, n-propanol, methoxy propanol, diacetone alcohol and the like.

The thermosetting compositions may be applied to a substrate in any known manner, such as by roller coating, spraying, brushing, sprinkling, flow coating and dipping. It is preferred that the composition should be applied by spraying.

Suitable substrates include those of metals which may be pretreated or not, and certain synthetic materials which are able to withstand baking conditions. Especially preferred are metals such as iron, steel and aluminum.

Curing of the coating requires elevated temperature (thermosetting) conditions generally ranging from 100°-200°C, and preferably between 120°-150°C.

The foregoing discussion of the present invention is exemplified by the following specific examples offered by way of illustration and not limitation on the scope thereof.

Examples 1-20

An aqueous emulsion of a self-crosslinking acrylic polymer was prepared as follows:
In a glass reactor are precharged the following:
985,0 g of deionized water,
10,0 g of a polyvinylpyrrolidone non-ionic stabilizer (commercially available under the trade designation polyvinylpyrrolidone K30 from GAF) and
28,6 g of tert.butylhydroperoxide (70% active matter).
In a separate container, a pre-emulsion was prepared by mixing the following under ambient conditions:
700,0 g of deionized water,
114,2 g of a nonylphenol polyglycol ether (40 ethylene oxide groups) non-ionic stabilizer (70% active matter) (commercially available under the trade designation Antarox Co987 from GAF),
600,0 g of styrene,
600,0 g of butyl acrylate,
400,0 g of hydroxypropyl methacrylate and
400,0 g of glycidyl methacrylate.

The precharge was heated to 55°C, at which point a first solution of 1 g of sodium formaldehyde sulphoxylate in 100 g was added. At the same time, the addition of the pre-emulsion and a second solution of 9,4 g of sodium formaldehyde sulphoxylate in 300 g water was begun. The feeding time of the pre-emulsion was about 3 hours and of the second solution about 4 hours, during which time reactor temperature was maintained between 55°-60°C.

Upon completion of the addition of the second solution, the reaction was maintained for an additional 15 minutes, after which the reactor contents were cooled to 30°C and filtered through a 60-mesh wire netting.

100g of the resulting dispersions (emulsions) were mixed with 2-5 g of a cosolvent (butyl glycol) under mild agitation. A catalyst compound, of the type as set forth in Table I and in an amount of 2,5wt% solids/solids, was added to the dispersion in order to catalyze the self-crosslinking reaction.

For investigating clarity, the resulting compositions were applied onto a glass panel by a film applicator to a dry film thickness of about 40μm, and baked at a temperature of 120°C for 30 minutes.

The resulting films were visually judged for clarity, and the results are presented in Table I.

For testing hardness and solvent resistance, the compositions were applied onto a steel panel (Bonder 132) by spraying to a dry film thickness of about 40-50μm, and baked at a temperature of 120°C for 30 minutes.

The resulting films were judged as to hardness via the König pendulum hardness test in accordance with DIN 53157. In addition, acetone resistance was determined via a double rub procedure, wherein a cloth was soaked in acetone and rubbed back and forth (1 D-rub) with about 400g of pressure on the film. After each five D-rubs, the film was assessed for damage. The results are also presented in Table I.

TABLE I

| EX | Compound | pH | Clarity | König Hard. | Acetone Resist. |
|---|---|---|---|---|---|
| 1 | Dimethylaminoethyl methacrylate | <11 | clear | 79 | < 5 |
| 2 | Chromium(III)-hexanoate | <11 | hazy | 78 | < 5 |
| 3 | Zinc acetate | <11 | sl hazy | 87 | < 5 |
| 4 | Hexamethylene tetraamine | <11 | clear | 114 | < 5 |
| 5 | Tetrabutylammonium hydroxide (TBAH) | 12,5 | clear | 150 | >50 |
| 6 | Sodium hydroxide | <11 | clear | 73 | < 5 |
| 7 | 2-mino-2-methylpropanol | <11 | clear | 97 | 10 |
| 8 | Dimethylethanol amine | <11 | clear | 99 | 10 |
| 9 | Hexylamine | <11 | clear | 96 | 10 |
| 10 | 1,4-diazabicyclo [2.2.2] octane (DABCO) | 12,3 | clear | 141 | 30 |
| 11 | p-toluene sulfonic acid | <11 | clear | 97 | < 5 |
| 12 | Diazabicyclo undecene | 12,5 | clear | 98 | < 5 |
| 13 | Trimethylguanidine | <11 | clear | 91 | < 5 |
| 14 | Tetramethylguanidine | <11 | clear | 85 | < 5 |
| 15 | Triphenylphosphine | <11 | clear | 87 | < 5 |
| 16 | Triphenylphosphite | <11 | clear | 84 | < 5 |
| 17 | Triethylamine | <11 | sl hazy | 87 | < 5 |
| 18 | Trimethylsulphonium iodide | <11 | clear | 80 | < 5 |
| 19 | Tetrabutyl phosphonium acetate | <11 | clear | 90 | 20 |
| 20 | None | <11 | clear | 97 | < 5 |

As can be seen from the above, surprisingly only two strong basic catalysts (TBAH and DABCO) resulted in an acceptable combination of hardness and solvent resistance (sufficient degree of selfcrosslinking) when utilized under the curing conditions of this example.

Only a limited number of preferred embodiments of the present invention have been described above. One skilled in the art, however, will recognize numerous substitutions, modifications and alterations which can be made without departing from the spirit and scope of the invention as limited by the following claims.

**Claims**

1. An aqueous dispersion of a self-crosslinking acrylic polymer comprising the emulsion polymerization product of a monomer mixture of addition polymerizable monomers including a glycidyl group-containing addition polymerizable monomer, characterized in that the monomer mixture comprises:
   (1) 10-40 wt% of a glycidyl group-containing addition polymerizable monomer,
   (2) 10-40 wt% of an hydroxyalkyl (meth)acrylate containing 2-12 carbon atoms in the alkyl group, and
   (3) 20-80 wt% of one or more other addition polymerizable monomers, which monomers contain substantially no functionality reactive with epoxy or hydroxyl groups under ther mosetting conditions,
   wherein the combination of (1), (2) and (3) comprises 100 wt%, wherein the (1)/(2) weight ratio is such so as to result in an epoxy/OH equivalents ratio of 0,75-1,25.

2. The aqueous dispersion of claim 1, characterized in that the glycidyl group-containing addition polymerizable monomer is selected from a glycidyl (meth)acrylate.

3. The aqueous dispersion of claim 1, characterized in that the hydroxyalkyl (meth)acrylate contains 2-4 carbon atoms in the alkyl group.

4. The aqueous dispersion of claim 1, characterized in that the hydroxyalkyl (meth)acrylate is selected from hydroxyethyl methacrylate, hydroxypropyl acrylates, hydroxypropyl methacrylates and hydroxybutyl acrylates.

5. The aqueous dispersion of any one of claims 1-5, characterized in that the monomer mixture comprises
   (1) 10-40 wt% of the glycidyl group-containing (meth)acrylate,

(2) 10-40 wt%     of the hydroxylalkyl (meth)acrylate,
(3a) 10-40 wt%    of an alkyl (meth)acrylate containing 2-12 carbon atoms in the alkyl group, and
(3b) 10-40 wt%    of a monovinyl aromatic compound.

6.  The aqueous disperison of claim 6, characterized in that the alkyl (meth)acrylate contains 2-4 carbon atoms in the alkyl group.

7.  The aqueous dispersion of claim 6, characterized in that the monovinyl aromatic compound is selected from styrene, para-methylstyrene and vinyl toluene.

8.  A water-based thermosetting composition comprising an aqueous dispersion of a self-crosslinking acrylic polymer comprising the emulsion polymerization product of a monomer mixture comprising
    (1) 10-40 wt%     of a glycidyl group-containing addition polymerizable monomer,
    (2) 10-40 wt%     of an hydroxyalkyl (meth)acrylate containing 2-12 carbon atoms in the alkyl group, and
    (3) 20-80 wt%     of one or more other addition polymerizable monomers, which monomers contain substantially no functionality reactive with epoxy or hydroxyl groups under ther mosetting conditions,
    wherein the combination of (1), (2) and (3) comprises 100 wt%, and wherein the (1)/(2) weight ratio is such so as to result in an epoxy/OH equivalents ratio of 0,5-2,0; and 0,1-5,0 wt% (based upon the polymer solids of the aqueous dispersion) of the strong basic catalyst, wherein the strong basic catalyst has been added in an amount to result in the thermosetting composition possessing a pH of at least 11.

9.  A water-based thermosetting composition comprising the aqueous dispersion of any one of claims 1-7 and 0,1-5,0 wt% (based upon the polymer solids of the aqueous dispersion) of a strong basic catalyst, wherein the strong basic catalyst has been added in an amount to result in the thermosetting composition possessing a pH of at least 11.

10. The water-based thermosetting composition of claim 8 or 9, characterized in that the strong basic catalyst has been added in an amount to result in the thermosetting composition possessing a pH in the range of 11-13.

11. The water-based thermosetting composition of claim 10, characterized in that the strong basic catalyst has been added in an amount to result in the thermosetting composition possessing a pH in the range of 11,5-12,5.

12. The water-based thermosetting composition of any one of claims 8-11, characterized in that the strong basic catalyst is selected from
    (a) a tetraalkylammonium hydroxide containing 1-5 carbon atoms in the alkyl group, and
    (b) 1,4-diazabicyclo [2.2.2] octane.

13. The water-based thermosetting composition of claim 12, characterized in that the strong basic catalyst is selected from a tetraalkylammonium hydroxide containing 1-5 carbon atoms in the alkyl group.

14. An aqueous coating composition comprising the water-based thermosetting composition of any one of claims 8-13.

15. The aqueous coating composition of claim 14, further comprising a pigment.

16. A method of coating a substrate by applying the aqueous coating composition according to any one of claims 14-15 and curing the same under thermosetting conditions.

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | EP-A-0 270 427 (SOCIETE CHIMIQUE DES CHARBONNAGES) <br> * column 1, line 52 - column 8, line 24 * <br> & US-A-4 933 213 <br> --- | 1-16 | C08F220/32 <br> C08F220/28 <br> C08F220/26 <br> C08F8/00 |
| X,D | EP-A-0 267 554 (JOHNSON AND SON) <br> *claims* <br> * page 4, line 4 - page 5, line 25 * <br> --- | 1-7 | |
| A | EP-A-0 408 858 (BASF CORPORATION) <br> --- | 1-15 | |
| A | CHEMICAL ABSTRACTS, vol. 85, no. 2, <br> 12 July 1976, Columbus, Ohio, US; <br> abstract no. 6607E, <br> JAPAN ATOMIC ENERGY RESEARCH INSTITUTE: <br> 'Transparent and impact-resistant acrylic polymer' <br> page 45 ; column 1 ; <br> * abstract * <br> & JP-A-51 025 548 (...) 2 March 1976 <br><br> ----- | 1-7 | |

| | |
|---|---|
| | **TECHNICAL FIELDS SEARCHED (Int. Cl.5)** |
| | C08F |

The present search report has been drawn up for all claims

| Place of search | Date of completion of the search | Examiner |
|---|---|---|
| THE HAGUE | 22 MAY 1992 | ANDRIOLLO G.R. |

EPO FORM 1503 03.82 (P0401)